# FASCICULE DE BREVET EUROPEEN

(11) **EP 2 834 492 B1**
(45) Date de publication et mention de la délivrance du brevet: **18.01.2017**
(21) Numéro de dépôt: 13719918.8
(22) Date de dépôt: 25.03.2013
(51) Int. Cl.: F02B 75/02, F02D 41/30, F02B 69/06, F01L 1/08, F01L 13/00, F01L 13/06, F01L 1/047

(54) **DISPOSITIF POUR LA DESACTIVATION PARTIELLE DES CYLINDRES D'UN MOTEUR A COMBUSTION INTERNE**
VORRICHTUNG ZUR TEILWEISEN ZYLINDERABSCHALTUNG IN EINER BRENNKRAFTMASCHINE
DEVICE FOR PARTIALLY DEACTIVATING THE CYLINDERS OF AN INTERNAL COMBUSTION ENGINE

(30) Priorité: 02.04.2012 FR 1252999
(43) Date de publication de la demande: 11.02.2015
(73) Titulaire: Peugeot Citroën Automobiles SA, 78140 Vélizy-Villacoublay (FR)
(72) Inventeur: KALDANY, Serge, F-75008 Paris (FR); BRIFFOD, Fabien, F-75005 Paris (FR); CARRA, Damien, F-69210 Sain Bel (FR); VEIGA PAGLIARI, Diego Rafael, F-75012 Paris (FR)
(86) Numéro de dépôt international: PCT/FR2013/050633
(87) Numéro de publication internationale: WO 2013/150213

(56) Documents cités:
- EP-A1- 0 671 550
- EP-A1- 1 455 063
- DE-A1- 3 713 383
- DE-A1- 4 230 809
- DE-A1- 4 322 212
- DE-A1- 10 349 902
- DE-A1-102007 038 078
- JP-A- 2006 112 258
- US-A- 3 110 195
- US-A- 3 451 213
- US-A1- 2009 277 434
- US-A1- 2012 055 444

## Description

L'invention porte sur un dispositif pour la désactivation partielle des cylindres d'un moteur à combustion interne du type à trois cylindres.

Les moteurs à combustion interne, et notamment les moteurs équipant les véhicules automobiles, ne sont sollicités la plupart du temps qu'à une fraction de leur puissance nominale.

Dans ces phases de fonctionnement qui ne réclament pas de délivrer un couple important, les moteurs subissent des pertes de rendement appelées « pertes de pompage », qui sont à l'origine d'une consommation excessive de carburant.

Ces pertes de pompage correspondent au travail fourni pour aspirer le mélange air/carburant qui est situé dans le collecteur d'admission à une pression relativement faible et pour l'introduire dans la chambre de combustion lors de la phase d'admission.

Pour réduire ces pertes de pompage, il est connu de désactiver et rendre inactif un certain nombre de cylindres.

Ces cylindres désactivés voient alors leurs soupapes d'admission et leurs soupapes d'échappement fermées, les cylindres n'étant plus traversés par aucun flux de mélange gazeux.

Ces cylindres désactivés ne génèrent presque plus de pertes de pompage car ils fonctionnent dès lors comme un ressort pneumatique, leur piston alternant les phases de compression et de décompression du mélange gazeux emprisonné dans ces cylindres.

Quant aux cylindres demeurant activés, ils doivent produire un couple plus important et donc requièrent un débit plus important de l'air d'admission dans le collecteur, ce qui augmente la pression dans le répartiteur et donc réduit les pertes par pompage du moteur.

On connait, à l'exemple du document EP0671550A1, de nombreux dispositifs permettant de désactiver au moins un cylindre d'un moteur à combustion interne.

Le document DE- 4322212-A1 décrit et représente un dispositif comportant deux cames qui sont montées sur un arbre à cames et qui sont décalées angulairement d'un demi-tour, chaque came étant associée à une soupape du moteur à combustion interne.

La première came agit directement sur la soupape par l'intermédiaire d'un premier culbuteur, et la deuxième came agit sur un second culbuteur qui peut être couplé au premier culbuteur.

Si les deux culbuteurs sont couplés entre eux, la soupape est actionnée deux fois par tour d'arbre à cames, de sorte que le moteur fonctionne selon un mode à quatre cylindres.

Si les culbuteurs sont désaccouplés, la première came agit de telle sorte que la soupape est actionnée seulement une fois par tour d'arbre à cames, de sorte que le moteur fonctionne selon un mode à huit cylindres.

Le mode à huit cylindres correspond à une désactivation partielle des cylindres du moteur.

Ce type de dispositif de désactivation est conçu pour un moteur du type à quatre cylindres ou à huit cylindres, mais il n'est pas adapté pour un moteur à trois cylindres.

En effet, la désactivation d'un cylindre sur un moteur à trois cylindres entraîne une répartition des explosions dans les cylindres irrégulière dans le temps, deux explosions étant suivies d'un temps sans explosion.

Cette répartition irrégulière provoque notamment des vibrations gênantes dans le vilebrequin et du bruit supplémentaire.

On connait encore le document US2012055444A1 correspondant au préambule de la revendication 1. On connait encore de DE10349902A1 un dispositif d'arbres à cames.

Pour éviter cet inconvénient, l'invention propose un dispositif pour la désactivation partielle des cylindres d'un moteur à combustion interne comportant trois pistons qui sont liés sur un vilebrequin, qui sont chacun montés dans un cylindre associé, et qui coopèrent chacun avec au moins une soupape d'admission mue par un premier arbre à cames et une soupape d'échappement mue par un second arbre à cames, le dispositif comportant un moyen de désactivation partielle qui est conçu pour désactiver les trois cylindres en alternance de façon régulière, (de sorte que chaque cylindre est désactivé régulièrement), et le dispositif est conçu pour occuper un état d'activation des cylindres dans lequel les moyens de désactivation partielle sont désactivés, et un état de désactivation partielle des cylindres dans lequel les moyens de désactivation partielle sont activés, le premier arbre à cames (20) et le second arbre à cames sont liés en rotation sur le vilebrequin (16) selon un rapport de réduction d'un quart, chaque arbre à cames (20) est monté coulissant axialement entre une première position d'activation dans laquelle le dispositif (10) occupe son état d'activation des cylindres (12) et une seconde position de désactivation partielle dans laquelle le dispositif (10) occupe son état de désactivation partielle des cylindres (12),
le premier arbre à cames (20) et le second arbre à cames présentent chacun une forme cylindrique creuse qui délimite un alésage (38) axial, et en ce que le dispositif (10) comporte une première tige (40) axiale et une seconde tige axiale qui sont liées en rotation sur le premier arbre à cames (20) et sur le second arbre à cames respectivement, chaque tige (40) étant agencée dans l'alésage (38) de l'arbre à cames (20) associé de sorte que chaque arbre à cames (20) est monté coulissant axialement sur ladite tige (40) associée entre sa position d'activation et sa position de désactivation partielle,
et chaque arbre à cames comportant :
- au moins un premier jeu de cames doubles qui est conçu pour actionner les soupapes associées à chaque cylindre deux fois par tour de l'arbre à cames associé, de sorte que chaque cylindre est activé,
- au moins un second jeu de cames simples ou intermédiaires doubles formant moyen de désactivation partielle, qui est conçu pour actionner les soupapes associées à chaque cylindre une fois par tour de l'arbre à cames associé, de sorte que chaque cylindre est désactivé partiellement pour empêcher une explosion sur deux, et le premier jeu de cames doubles actionne les soupapes associées lorsque le dispositif occupe son état d'activation des cylindres, et le second jeu de cames simples ou intermédiaires doubles actionne les soupapes associées lorsque le dispositif occupe son état de désactivation partielle.

Ainsi, le dispositif selon l'invention permet de désactiver partiellement les cylindres d'un moteur à trois cylindres sans provoquer de vibrations ou déséquilibres supplémentaires. Ainsi encore, un simple coulissement des arbres à cames permet au dispositif de passer d'un état d'activation à un état de désactivation partielle.

Selon l'invention, on comprend par came « intermédiaire double » une came qui présente un profil avec deux lobes, comme une came double, mais avec la différence qu'un des deux lobes présente une dimension inférieure à l'autre, et notamment une distance maximale à l'arbre inférieure. De fait, on peut modifier la loi de commande, le lobe le plus grand permettant d'ajuster la quantité d'air échangée et/ou enfermée dans le cylindre, le lobe le plus petit permettant, notamment, de minimiser le pompage quand le cylindre est à l'état désactivé.

De préférence, comme pour une came double, les deux lobes de cette came « intermédiaire » sont opposés par rapport à l'axe de leur arbre à came.

De plus, chaque premier jeu de cames doubles comporte trois cames doubles qui sont décalées angulairement entre elles d'un tiers de tour autour de l'axe de rotation de l'arbre à cames associé, chaque came double étant constituée d'une première came et d'une deuxième came qui sont opposées radialement en vis à vis, et chaque second jeu de cames simples comporte trois cames simples ou intermédiaires doubles qui sont décalées angulairement entre elles d'un tiers de tours.

Aussi, chaque came simple ou intermédiaire double est agencée à côté d'une came double associée, chaque came simple ou intermédiaire double étant agencée selon une même orientation angulaire que la première came de la came double associée, autour de l'axe de rotation de l'arbre à cames associé.

Selon une variante, le second jeu comporte des cames intermédiaires doubles présentant une première portion de came de type came simple, notamment apte à régler la charge du cylindre quand il est désactivé, et une deuxième portion de came de type intermédiaire, de dimensions inférieures à la première portion de came, et notamment apte à minimiser le pompage quand le cylindre est à l'état désactivé (portions appelée également « lobes » plus haut).

De préférence, la deuxième portion de came est opposée à la première portion de came par rapport à l'axe de leur arbre et, de préférence, sa dimension maximale par rapport audit axe est d'au plus 90% de la dimension maximale de la première portion de came, et notamment d'au moins 40% de la dimension maximale de ladite première portion, de préférence comprise entre 50 et 80% de ladite dimension maximale de ladite première portion. Le profil peut varier entre 20 et 150% de la largeur de la loi de commande d'origine avec came simple, et entre 20% et 100% de la hauteur de ladite loi.

En effet, en utilisant des cames « intermédiaires » plutôt que des cames simples, on peut modifier la loi de commande pour améliorer les performances du moteur, notamment en optimisant la charge du cylindre et en réduisant le phénomène de pompage.

De façon complémentaire, le dispositif comporte des moyens d'entraînement en coulissement du premier arbre à cames et du second arbre à cames entre leur position d'activation et leur position de désactivation partielle, qui sont commandés par une unité électronique de commande.

De plus, le dispositif comporte au moins un premier pignon et un second pignon qui sont liés en rotation sur le premier arbre à cames et sur le second arbre à cames respectivement, et un troisième pignon qui est lié en rotation sur le vilebrequin et qui entraîne en rotation ledit premier pignon et ledit second pignon selon un rapport d'un quart.

Enfin, le premier arbre à cames et le second arbre à cames sont identiques.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective, qui illustre un premier arbre à cames comportant un premier jeu de cames doubles et un second jeu de cames simples selon l'invention,
- la figure 2 est une vue schématique, qui illustre le premier arbre à cames de la figure 1 qui est lié en rotation sur le vilebrequin et qui occupe une position d'activation,
- la figure 3 est une vue schématique similaire à la figure 2, qui illustre le premier arbre à cames de la figure 1 dans sa position de désactivation,
- les figures 4a et 4b sont des tableaux à double entrée comportant chacun une ligne par cylindre et une colonne pour l'angle de rotation du vilebrequin, un 1 correspondant à une explosion dans le cylindre, une croix correspondant à une absence d'explosion, la figure 4a illustrant le fonctionnement du dispositif selon l'invention dans son état d'activation des cylindres et la figure 4b illustrant le fonctionnement du dispositif selon l'invention dans son état de désactivation partielle des cylindres,
- la figure 5a est un agrandissement de l'arbre à cames selon la figure 1 centré sur une came double adjacente à une came simple,
- la figure 5b est une variante de la figure 5a, où la forme de la came simple a été modifiée en came « intermédiaire »,
- la figure 6 représente la course de la came « intermédiaire » selon la figure 5b.

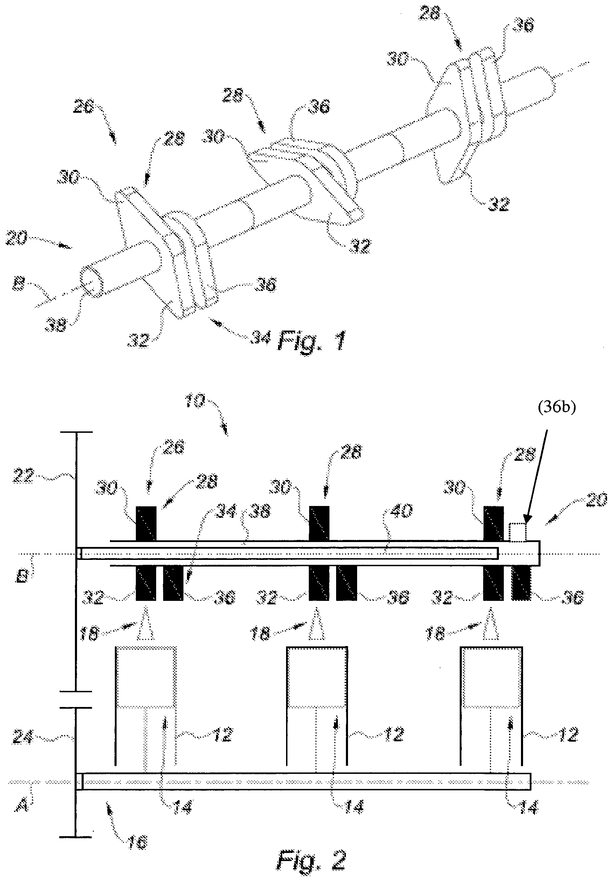

On a représenté à la figure 2 un dispositif 10 pour la désactivation partielle des cylindres 12 d'un moteur à combustion interne comportant trois pistons 14.

Chaque piston 14 est monté coulissant dans un cylindre 12 associé pour entraîner un vilebrequin 16 en rotation autour d'un axe A de rotation.

De plus, chaque cylindre 12 coopère avec une soupape d'admission 18 entraînée par un premier arbre à cames 20 qui est monté en rotation autour d'un axe B de rotation, pour permettre l'injection d'un mélange carburé dans chaque cylindre 12.

De même, chaque cylindre 12 coopère avec une soupape d'échappement (non représentée) mue par un second arbre à cames (non représenté) qui est monté en rotation autour d'un axe de rotation, pour permettre l'échappement des gaz brûlés à la suite de l'explosion dans chaque cylindre 12.

Le second arbre à cames étant identiques au premier arbre à cames 20, il ne sera que partiellement décrit pour ne pas alourdir inutilement la description.

Selon la figure 2, le dispositif 10 comporte un premier pignon 22 et un second pignon (non représenté) qui sont liés en rotation sur le premier arbre à cames 20 et sur le second arbre à cames respectivement.

Le vilebrequin 16 est lié en rotation sur un troisième pignon 24 qui entraîne en rotation ledit premier pignon 22 et ledit second pignon selon un rapport d'un quart, de sorte que le vilebrequin 16 tourne quatre fois plus vite que le premier arbre à cames 20 et le second arbre à cames.

Le premier arbre à cames 20 comporte un premier jeu 26 de cames doubles 28 qui est conçu pour actionner les soupapes d'admission 18 qui sont associées à chaque cylindre 12.

Le premier jeu 26 de cames doubles 28 est conçu pour actionner les soupapes d'admission 18 associées à chaque cylindre 12 deux fois par tour de l'arbre à cames 16 associé, de sorte que chaque cylindre 12 est activé.

Comme on peut le voir à la figure 1, le premier jeu 26 de cames doubles 28 comporte trois cames doubles 28 qui sont décalées angulairement entre elles d'un tiers de tour, ou 120°, autour de l'axe B de rotation du premier arbre à cames 20.

Chaque came double 28 est constituée d'une première came 30 et d'une deuxième came 32 qui sont opposées radialement en vis à vis, chaque came double 28 étant conçue pour actionner la soupape d'admission 18 associée, deux fois par tour de l'arbre à cames 16, de sorte que chaque cylindre 12 est activé.

L'expression « activé », pour un cylindre 12, signifie ici que la soupape d'admission 18 permet l'injection du mélange carburé dans le cylindre 12, qu'une explosion se produit dans le cylindre 12 et que la soupape d'échappement associée permet l'échappement des gaz brûlés dans ce même cylindre.

A l'inverse, l'expression « désactivé » ou « désactivation », pour un cylindre 12, signifie que la soupape d'admission 18 et la soupape d'échappement sont immobiles et que le cylindre est obturé.

De façon complémentaire, le premier arbre à cames 20 comporte un second jeu 34 de cames simples 36 formant moyen de désactivation partielle, qui est conçu pour actionner partiellement les soupapes d'admission 18 qui sont associées à chaque cylindre 12.

Le second jeu 34 de cames simples 36 est conçu pour actionner les soupapes d'admission 18 associées à chaque cylindre 12 une fois par tour de l'arbre à cames 16, de sorte que chaque cylindre 12 est désactivé partiellement pour empêcher une explosion sur deux.

Le second jeu 34 comporte trois cames simples 36 qui sont décalées angulairement entre elles d'un tiers de tours, ou 120 degrés, autour de l'axe B de rotation du premier arbre à cames 20, chaque came simple 36 étant conçue pour actionner la soupape d'admission 18 associée à un cylindre 12, une fois par tour de l'arbre à cames 16.

Chaque came simple 36 est agencée à côté de la première came 30 d'une came double 28 associée du premier jeu 26, chaque came simple 36 étant agencée selon une même orientation angulaire que la première came 30 associée, autour de l'axe B de rotation du premier arbre à cames 20.

De même, le second arbre à cames comporte un premier jeu de cames doubles qui est conçu pour actionner les soupapes d'échappement qui sont associées à chaque cylindre 12, et un second jeu de cames simples formant moyen de désactivation partielle, qui est conçu pour actionner partiellement les soupapes d'échappement qui sont associées à chaque cylindre 12.

Conventionnellement, le second arbre à cames est déphasé par rapport au premier arbre à cames 20.

Le dispositif 10 selon l'invention est conçu pour occuper un état d'activation des cylindres 12, représenté à la figure 2, dans lequel le premier jeu 26 de cames doubles 28 du premier arbre à came 20 actionne les soupapes d'admission 18 et le premier jeu de cames doubles du second arbre à came actionne les soupapes d'échappement, le second jeu 34 de cames simples 36 du premier arbre à cames 20 et du second arbre à came étant inactifs.

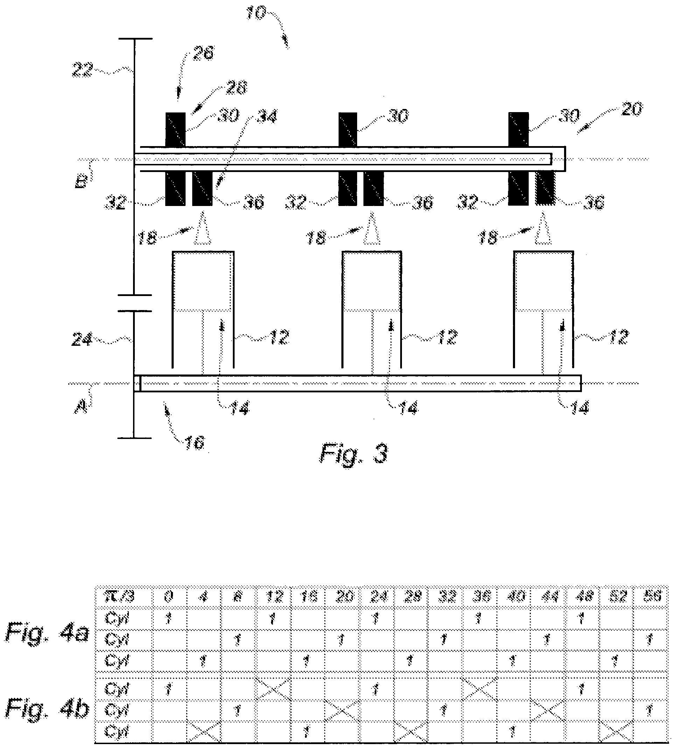

A l'inverse, le dispositif 10 selon l'invention est apte à occuper un état de désactivation partielle des cylindres 12, représenté à la figure 3, dans lequel le second jeu 34 de cames simples 36 du premier arbre à cames 20 actionne les soupapes d'admission et le second jeu de cames simples du second arbre à cames actionne les soupapes d'échappement, le premier jeu 26 de cames doubles 28 du premier arbre à cames 20 et du second arbre à cames étant inactifs.

A cet effet, le premier arbre à cames 20 est monté coulissant axialement selon son axe B de rotation, entre une première position d'activation représentée à la figure 2, dans laquelle le dispositif 10 occupe son état d'activation des cylindres 12, et une seconde position de désactivation partielle représentée à la figure 3, dans laquelle le dispositif 10 occupe son état de désactivation partielle des cylindres 12.

Le premier arbre à cames 20 présente une forme cylindrique creuse selon l'axe B qui délimite un alésage 38 axial.

De plus, le dispositif 10 comporte une première tige 40 axiale qui est liée en rotation sur le premier arbre à cames 20 et qui est agencée dans l'alésage 38 du premier arbre à cames 20, de sorte que le premier arbre à cames 20 est monté coulissant axialement sur la première tige 40 associée entre sa position d'activation et sa position de désactivation partielle.

Complémentairement, le dispositif 10 comporte des moyens d'entraînement (non représentés) en coulissement du premier arbre à cames 20 entre sa position d'activation et sa position de désactivation partielle, qui sont commandés par une unité électronique de commande.

Les moyens d'entraînement comportent par exemple un vérin qui coopère avec le premier arbre à cames 20.

La figure 4a illustre le fonctionnement du dispositif 10 selon l'invention dans son état d'activation des cylindres 12, dans lequel les cylindres 12 sont activés successivement pour engendrer une explosion.

La figure 4b illustre le fonctionnement du dispositif 10 selon l'invention dans son état de désactivation des cylindres 12, dans lequel les cylindres 12 sont chacun désactivés successivement en alternance et régulièrement pour empêcher une explosion sur deux des cylindres par rapport à l'état d'activation décrit précédemment.

Ainsi, dans son état de désactivation partielle, le dispositif 10 permet de diminuer la consommation de carburant du moteur, sans engendrer de vibrations supplémentaires dues à une répartition irrégulière des explosions dans le temps.

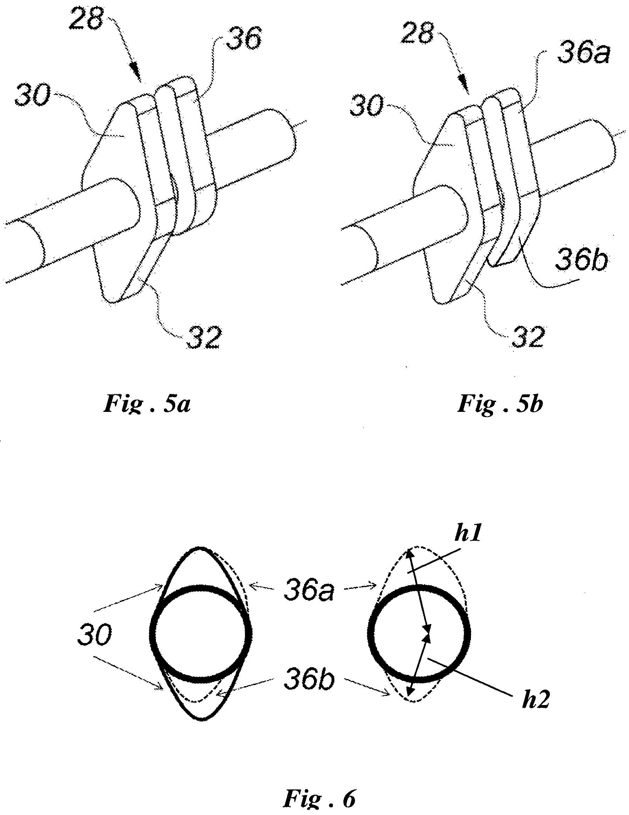

La figure 5a reprend la forme d'une paire de came, avec une came double et une came simple selon la figure 1. La figure 5b représente une variante d'une paire de cames, avec la même came double mais associée à une came dite « intermédiaire double », comprenant un lobe 36a identique ou similaire à celui de la came double et un lobe 36b opposé par rapport à l'axe de l'arbre à cames de dimensions inférieures. Ce lobe, quand l'arbre à cames est en rotation, définit une trajectoire extérieure plus petite que le lobe 36a, comme représenté en figure 6 : sa dimension maximale h2 par rapport au centre de l'arbre à cames est d'environ 20% à 100%, notamment 60 à 80% au plus de la distance maximale h1 du lobe opposé 36a. On choisit le dimensionnement relatif, et notamment cette valeur h2 par rapport à h1 en fonction du point de fonctionnement moteur donné.

Le lobe 36a sert donc à régler la charge, la quantité de gaz du cylindre, alors que le lobe plus petit 36b sert à minimiser le pompage quand le cylindre est désactivé. Le fait d'utiliser ce type de came intermédiaire plutôt qu'une came simple donne donc une possibilité supplémentaire de contrôler la quantité d'air du cylindre. Le dimensionnement du lobe plus petit peut être adapté selon les besoins. La figure 2 présente en pointillés une came intermédiaire double avec son lobe 36b, pour visualiser schématiquement la différence entre came intermédiaire et came simple.

## Revendications

1. Dispositif (10) pour la désactivation partielle des cylindres (12) d'un moteur à combustion interne comportant trois pistons (14) qui sont liés sur un vilebrequin (16), qui sont chacun montés dans un cylindre (12) associé, et qui coopèrent chacun avec au moins une soupape d'admission (18) mue par un premier arbre à cames (20) et une soupape d'échappement mue par un second arbre à cames, le dispositif (10) comportant un moyen de désactivation partielle (34) qui est conçu pour désactiver les trois cylindres (12) en alternance de façon régulière, et étant conçu pour occuper un état d'activation des cylindres (12) dans lequel les moyens de désactivation partielle sont désactivés, et un état de désactivation partielle des cylindres (12) dans lequel les moyens de désactivations partielle sont activés,
**caractérisé en ce que** le premier arbre à cames (20) et le second arbre à cames sont liés en rotation sur le vilebrequin (16) selon un rapport de réduction d'un quart, chaque arbre à cames (20) est monté coulissant axialement entre une première position d'activation dans laquelle le dispositif (10) occupe son état d'activation des cylindres (12) et une seconde position de désactivation partielle dans laquelle le dispositif (10) occupe son état de désactivation partielle des cylindres (12),
le premier arbre à cames (20) et le second arbre à cames présentent chacun une forme cylindrique creuse qui délimite un alésage (38) axial, et **en ce que** le dispositif (10) comporte une première tige (40) axiale et une seconde tige axiale qui sont liées en rotation sur le premier arbre à cames (20) et sur le second arbre à cames respectivement, chaque tige (40) étant agencée dans l'alésage (38) de l'arbre à cames (20) associé de sorte que chaque arbre à cames (20) est monté coulissant axialement sur ladite tige (40) associée entre sa position d'activation et sa position de désactivation partielle,
et chaque arbre à cames (20) comportant :
- au moins un premier jeu (26) de cames doubles (28) qui est conçu pour actionner les soupapes (18) associées à chaque cylindre (12) deux fois par tour de l'arbre à cames (20) associé, de sorte que chaque cylindre (12) est activé,
- au moins un second jeu (34) de cames simples (36) ou intermédiaires doubles (36a,36b) formant moyen de désactivation partielle, qui est conçu pour actionner les soupapes (18) associées à chaque cylindre (12) une fois par tour de l'arbre à cames (20) associé, de sorte que chaque cylindre (12) est désactivé partiellement pour empêcher une explosion sur deux, et **en ce que** le premier jeu (26) de cames doubles (28) actionne les soupapes (18) associées lorsque le dispositif (10) occupe son état d'activation des cylindres (12), et le second jeu (34) de cames simples (36) ou intermédiaires doubles (36a, 36b) actionne les soupapes (18) associées lorsque le dispositif (10) occupe son état de désactivation partielle.

2. Dispositif (10) selon la revendication 1, **caractérisé en ce que** chaque premier jeu (26) de cames doubles (28) comporte trois cames doubles (28) qui sont décalées angulairement entre elles d'un tiers de tour autour de l'axe (B) de rotation de l'arbre à cames (20) associé, chaque came double (34) étant constituée d'une première came (30) et d'une deuxième came (32) qui sont opposées radialement en vis à vis, et **en ce que** chaque second jeu (34) de cames simples (36) ou intermédiaires doubles (36a,36b) comporte trois cames simples (36) ou intermédiaires doubles (36a,36b) qui sont décalées angulairement entre elles d'un tiers de tours.

3. Dispositif (10) selon la revendication 2, **caractérisé en ce que** chaque came simple (36) ou intermédiaire double (36a,36b) est agencée à côté d'une came double (28) associée, chaque came simple (36) ou intermédiaire double (36a,36b) étant agencée selon une même orientation angulaire que la première came (30) de la came double (28) associée, autour de l'axe (B) de rotation de l'arbre à cames (20) associé.

4. Dispositif (10) selon l'une des revendications précédentes, **caractérisé en ce que** le second jeu (34) comporte des cames intermédiaires doubles (36a,36b) présentant une première portion de came (36a) de type came simple et une deuxième portion de came (36b) de type intermédiaire, de dimensions inférieures à la première portion de came (36a).

5. Dispositif (10) selon l'une des revendications précédentes, **caractérisé en ce que** le dispositif (10) comporte des moyens d'entraînement en coulissement du premier arbre à cames (20) et du second arbre à cames entre leur position d'activation et leur position de désactivation partielle, qui sont commandés par une unité électronique de commande.

6. Dispositif (10) selon l'une des revendications précédentes, **caractérisé en ce que** le dispositif (10) comporte au moins un premier pignon (22) et un second pignon qui sont liés en rotation sur le premier arbre à cames (20) et sur le second arbre à cames respectivement, et un troisième pignon (24) qui est lié en rotation sur le vilebrequin (16) et qui entraîne en rotation ledit premier pignon (22) et ledit second pignon selon un rapport d'un quart.

7. Dispositif (10) selon l'une des revendications précédentes, **caractérisé en ce que** le premier arbre à cames (20) et le second arbre à cames sont identiques.

## Patentansprüche

1. Vorrichtung (10) zum teilweisen Deaktivieren der Zylinder (12) einer Brennkraftmaschine, die drei Kolben (14) umfasst, die auf einer Kurbelwelle (16) verbunden sind, die jeweils in einen dazugehörenden Zylinder (12) montiert sind, und die mit mindestens einem Ansaugventil (18) zusammenwirken, das von einer ersten Nockenwelle (20) bewegt wird, und einem Abgasventil, das von einer zweiten Nockenwelle bewegt wird, wobei die Vorrichtung (10) ein Mittel zum teilweisen Deaktivieren (34) umfasst, das konzipiert ist, um die drei Zylinder (12) abwechselnd regelmäßig zu deaktivieren, und konzipiert ist, um einen Aktivierungszustand der Zylinder (12) einzunehmen, in dem die Mittel zum teilweisen Deaktivieren deaktiviert sind, und einen Zustand des teilweisen Deaktivierens, und einen Zustand des teilweisen Deaktivierens der Zylinder (12), in dem die Mittel zum teilweisen Deaktivieren aktiviert sind,
**dadurch gekennzeichnet, dass** die erste Nockenwelle (20) und die zweite Nockenwelle in Drehung auf der Kurbelwelle (16) gemäß einem Untersetzungsverhältnis eines Viertels verbunden sind, wobei jede Nockenwelle (20) axial gleitend zwischen einer ersten Aktivierungsposition, in der die Vorrichtung (10) ihren Aktivierungszustand der Zylinder (12) belegt, und einer zweiten Position zum teilweisen Deaktivieren, in dem die Vorrichtung (10) ihren Zustand zum teilweisen Deaktivieren der Zylinder (12) belegt, montiert ist,
die erste Nockenwelle (20) und die zweite Nockenwelle jeweils eine hohle zylindrische Form aufweisen, die eine axiale Bohrung (38) abgrenzt, und dass die Vorrichtung (10) einen ersten axialen Schaft (40) und einen zweiten axialen Schaft umfasst, die in Drehung jeweils auf der ersten Nockenwelle (20) und auf der zweiten Nockenwelle verbunden sind, wobei jeder Schaft (40) in der Bohrung (38) der dazugehörenden Nockenwelle (20) derart eingerichtet ist, dass jede Nockenwelle (20) axial auf dem dazugehörenden Schaft (40) zwischen ihrer Aktivierungsposition und ihrer Position zum teilweisen Deaktivieren gleitend montiert ist,
und jede Nockenwelle (20) Folgendes umfasst:
- mindestens einen ersten Satz (26) doppelter Nocken (28), der konzipiert ist, um die Ventile (18), die mit jedem Zylinder (12) verbunden sind, zwei Mal pro Umdrehung der dazugehörenden Nockenwelle (20) derart zu betätigen, dass jeder Zylinder (12) aktiviert wird,
- mindestens einen zweiten Satz (34) einfacher Nocken (36) oder doppelter Zwischennocken (36a, 36b), die das Mittel zum teilweisen Deaktivieren bilden, der konzipiert ist, um die Ventile (18), die mit jedem Zylinder (12) verbunden sind, einmal pro Umdrehung der dazugehörenden Nockenwelle (20) zu drehen, so dass jeder Zylinder (12) teilweise deaktiviert wird, um jede zweite Explosion zu verhindern, und dass der erste Satz (26) doppelter Nocken (28) die dazu gehörenden Ventile (18) betätigt, wenn die Vorrichtung (10) ihren Aktivierungszustand der Zylinder (12) belegt, und der zweite Satz (34) einfacher Nocken (36) oder doppelter Zwischennocken (36a, 36b) die dazu gehörenden Ventile (18) betätigt, wenn die Vorrichtung (10) ihren Zustand zum teilweisen Deaktivieren belegt.

2. Vorrichtung (10) nach Anspruch 1, **dadurch gekennzeichnet, dass** jeder erste Satz (26) doppelter Nocken (28) drei doppelte Nocken (28) umfasst, die winkelig untereinander um ein Drittel Umdrehung um die Rotationsachse (B) der dazugehörenden Nockenwelle (20) versetzt sind, wobei jeder doppelte Nocken (34) aus einem ersten Nocken (30) und einem zweiten Nocken (32) besteht, die radial in Gegenüberlage entgegengesetzt sind, und dass jeder zweite Satz (34) einfacher Nocken (36) oder doppelter Zwischennocken (36a, 36b) drei einfache Nocken (36) oder doppelte Zwischennocken (36a, 36b), die winkelig untereinander um ein Drittel Umdrehung versetzt sind, umfasst.

3. Vorrichtung (10) nach Anspruch 2, **dadurch gekennzeichnet, dass** jeder einfache Nocken (36) oder doppelte Zwischennocken (36a, 36b) neben einem dazugehörenden doppelten Nocken (28) angeordnet ist, wobei jeder einfache Nocken (36) oder doppelte Zwischennocken (36a, 36b) gemäß einer selben Winkelausrichtung wie der erste Nocken (30) des dazugehörenden doppelten Nockens (28) um die Rotationsachse (B) der dazugehörenden Nockenwelle (20) angeordnet ist.

4. Vorrichtung (10) nach einem der vorhergehenden Ansprüche, **dadurch gekennzeichnet, dass** der zweite Satz (34) doppelte Zwischennocken (36a, 36b) umfasst, die einen ersten Nockenabschnitt (36a) des Typs einfache Nocken und einen zweiten Nockenabschnitt (36b) des Zwischentyps mit Maßen aufweisen, die kleiner sind als der erste Nockenabschnitt (36a).

5. Vorrichtung (10) nach einem der vorhergehenden Ansprüche, **dadurch gekennzeichnet, dass** die Vorrichtung (10) Schiebeantriebsmittel der ersten Nockenwelle (20) und der zweiten Nockenwelle zwischen ihrer Aktivierungsposition und ihrer Position zum teilweisen Deaktivieren, die von einer elektronischen Steuereinheit gesteuert sind, umfasst.

6. Vorrichtung (10) nach einem der vorhergehenden Ansprüche, **dadurch gekennzeichnet, dass** die Vorrichtung (10) mindestens ein erstes Ritzel (22) und ein zweites Ritzel umfasst, die in Drehung jeweils auf der ersten Nockenwelle (20) und auf der zweiten Nockenwelle verbunden sind, und ein drittes Ritzel (24), das in Drehung auf der Kurbelwelle (16) verbunden ist und das erste Ritzel (22) und das zweite Ritzel gemäß einem Verhältnis von einem Viertel antreibt.

7. Vorrichtung (10) nach einem der vorhergehenden Ansprüche, **dadurch gekennzeichnet, dass** die erste Nockenwelle (20) und die zweite Nockenwelle identisch sind.

## Claims

1. A device (10) for partially deactivating the cylinders (12) of an internal combustion engine having three pistons (14) which are connected to a crank shaft (16), which are each mounted in an associated cylinder (12) and which each collaborate with at least one inlet valve (18) moved by a first cam shaft (20) and an exhaust valve moved by a second cam shaft, the device (10) comprising a means (34) of partial deactivation which is designed to deactivate the three cylinders (12) alternately in a uniform fashion, and being designed to occupy a state of activation of the cylinders (12) in which the partial deactivation means are deactivated, and a state of partial deactivation of the cylinders (12) in which the partial deactivation means are activated,
**characterized in that** the first cam shaft (20) and the second cam shaft are rotationally connected to the crank shaft (16) in a 1-to-4 reduction ratio, each cam shaft (20) is mounted slidably axially between a first activation position in which the device (10) occupies its state of activation of the cylinders (12) and a second position of partial deactivation in which the device (10) occupies its state of partial deactivation of the cylinders (12),
the first cam shaft (20) and the second cam shaft each having a hollow cylindrical shape which delimits an axial bore (38), and **in that** the device (10) comprises a first axial rod (40) and a second axial rod which are rotationally connected to the first cam shaft (20) and to the second cam shaft respectively, each rod (40) being arranged in the bore (38) of the associated cam shaft (20) such that each cam shaft (20) is mounted slidably axially in said associated rod (40) between its position of activation and its position of partial deactivation,
and each cam shaft (20) comprising:
- at least a first set (26) of double cams (28) which is designed to actuate the valves (18) associated with each cylinder (12) twice per turn of the associated cam shaft (20), such that each cylinder (12) is activated,
- at least a second set (34) of simple cams (36) or intermediate double cams (36a, 36b) forming partial deactivation means, which is designed to actuate the valves (18) associated with each cylinder (12) once per turn of the associated cam shaft (20), such that each cylinder (12) is partially deactivated to prevent every other explosion, and **in that** the first set (26) of double cams (28) actuates the associated valves (18) when the device (10) occupies its state of activation of the cylinders (12), and the second set (34) of simple cams (36) or intermediate double cams (36a, 36b) actuates the associated valves (18) when the device (10) occupies its state of partial deactivation.

2. The device (10) according to Claim 1, **characterized in that** each first set (26) of double cams (28) comprises three double cams (28) which are offset angularly with respect to one another by a third of a turn around the rotation axis (B) of the associated cam shaft (20), each double cam (34) being constituted by a first cam (30) and a second cam (32) which are opposed radially in a facing manner, and **in that** each second set (34) of simple cams (36) or intermediate double cams (36a, 36b) comprises three simple cams (36) or intermediate double cams (36a, 36b) which are offset angularly with respect to one another by a third of a turn.

3. The device (10) according to Claim 2, **characterized in that** each simple cam (36) or intermediate double cam (36a, 36b) is arranged next to an associated double cam (28), each simple cam (36) or intermediate double cam (36a, 36b) being arranged according to the same angular orientation as the first cam (30) of the associated double cam (28), about the rotation axis (B) of the associated cam shaft (20).

4. The device (10) according to one of the preceding claims, **characterized in that** the second set (34) comprises double intermediate cams (36a, 36b) having a first cam portion (36a) of simple cam type and a second cam portion (36b) of intermediate type, having smaller dimensions than the first cam portion (36a).

5. The device (10) according to one of the preceding claims, **characterized in that** the device (10) comprises means of slidingly driving the first cam shaft (20) and the second cam shaft between their position of activation and their position of partial deactivation, which are controlled by an electronic control unit.

6. The device (10) according to one of the preceding claims, **characterized in that** the device (10) comprises at least a first pinion (22) and a second pinion which are rotationally connected to the first cam shaft (20) and to the second cam shaft respectively, and a third pinion (24) which is rotationally connected to the crankshaft (16) and which drives said first pinion (22) and said second pinion in rotation in a 1-to-4 ratio.

7. The device (10) according to one of the preceding claims, **characterized in that** the first cam shaft (20) and the second cam shaft are identical.
